**Europäisches Patentamt**

**European Patent Office**

**Office européen des brevets**

(19)

(11) Veröffentlichungsnummer: **0 162 808**

**B1**

(12)

# EUROPÄISCHE PATENTSCHRIFT

(45) Veröffentlichungstag der Patentschrift:
24.02.88

(21) Anmeldenummer: **85810190.0**

(22) Anmeldetag: **26.04.85**

(51) Int. Cl.⁴: **A 61 C 13/225**

(54) Vorrichtung zur Befestigung von Zahnprothesen.

(30) Priorität: **27.04.84 CH 2090/84**

(43) Veröffentlichungstag der Anmeldung:
**27.11.85 Patentblatt 85/48**

(45) Bekanntmachung des Hinweises auf die Patenterteilung:
**24.02.88 Patentblatt 88/8**

(84) Benannte Vertragsstaaten:
**CH DE FR GB IT LI**

(56) Entgegenhaltungen:
**CH-A-352 782**
**GB-A-2 117 642**
**GB-A-2 117 643**

(73) Patentinhaber: **Elgarden Aktiengesellschaft, 9490 Vaduz (Liechtenstein) (LI)**

(72) Erfinder: **Jansen, Jozef, St. Jacobs- Plaats, Rotterdam (NL)**

(74) Vertreter: **Tschudi, Lorenz, Bovard AG Patentanwälte VSP Optingenstrasse 16, CH- 3000 Bern 25 (CH)**

EP 0 162 808 B1

LIBER, STOCKHOLM 1988

## Beschreibung

Die vorliegende Erfindung betrifft eine Vorrichtung zur Befestigung von Zahnprothesen mit mindestens einem Verankerungselement, welches mindestens zwei Ausnehmungen aufweist, in welchen zum Eingreifen in bestehende Zähne oder Stützen bestimmte Stifte gelagert sind, wobei mindestens ein Stift in der für ihn bestimmten Ausnehmung drehbar gelagert ist.

Aus der Schweizer Patentschrift 619 856 ist eine Vorrichtung zur Befestigung von Zahnprothesen vorbekannt, welche Verankerungselemente mit zwei Stiften umfasst, welche in die eine Zahnlücke begrenzenden Zähne einsetzbar sind. Diese Vorrichtung weist den Nachteil auf, dass die beiden Stifte fest mit einer Halteplatte verbunden sind. Beim Bohren der entsprechenden Löcher in die die Zahnlücke begrenzenden Zähne müssen deshalb mit hoher Präzision zwei parallele Löcher gebohrt werden, was in der Praxis auf grosse Schwierigkeiten stösst.

Aus der britischen Patentschrift 2 117 642 ist weiter eine dentale Verankerung zur Befestigung von Prothesen vorbekannt. Diese Vorrichtung weist den Nachteil auf, dass ein Auffüllen der Öffnung in der Verankerung mit Zement notwendig ist, da sich sonst der Körper der Verankerung relativ zu den Stiften bewegen würde. Bei mechanischer Beanspruchung der Prothese löst sich infolge eines Schaukeleffektes der Zement in der obgenannten Öffnung, wobei sich dann der Körper gegenüber den Stiften lockert. Das Verankerungselement ist dimensionsmässig auch nachteiligerweise zu gross, da es aus einer Patrize und einer Matrize besteht. Im weiteren muss beim Abnehmen eines Abdruckes zwecks Herstellung der Brücke oder Prothese eine Hilfskappe über das dentale Verankerungselement angebracht werden. Ohne Hilfskappe würde das Abdruckmaterial in Vertiefungen der Matrize hineinlaufen. Die Stifte können auch nicht in einem genügend grossen Winkelbereich verschwenkt werden, um schräge Löcher in die als Verankerungen für die Prothese dienenden gesunden Zähne zu bohren. Ein schräges Bohren ist jedoch für den Zahnarzt viel praktischer.

Aus der veröffentlichten britischen Patentanmeldung 2 117 643 ist eine weitere dentale Verankerung für Prothesen vorbekannt. Die Vorrichtung gemäss dieser Vorveröffentlichung weist den Nachteil auf, dass die Patrize zu weit vom Zahn absteht, was sekundäre Karies zur Folge haben kann. Im weiteren treten infolge des Abstehens der Patrize vom Zahn Hebeleffekte auf, die den Zahn zerstören können. Des weiteren muss in Öffnungen im Verankerungselement ebenfalls ein Zementmaterial eingefüllt werden, damit sich der Körper des Verankerungselementes nicht relativ zu den Stiften bewegen kann. Durch die mechanische Beanspruchung der Prothese im Mund entsteht ebenfalls ein Schaukeleffekt, durch welchen sich der in die Öffnungen im Körper des Verankerungselementes eingefüllte Zement lockert. Dies führt ebenfalls dazu, dass sich der Körper des Verankerungselementes und damit die Prothese relativ zu den Stiften, die im Zahn eingesetzt sind, bewegen. Beim Abnehmen eines Abdruckes zur Herstellung der Prothese oder Brücke muss ebenfalls eine Hilfskappe über die Patrize gesetzt werden, damit das Abdruckmaterial nicht in die Vertiefungen der Matrize eindringen kann.

Es ist daher eine Aufgabe der vorliegenden Erfindung, eine Vorrichtung zur Befestigung von Zahnprothesen zu schaffen, welche die obgenannten Nachteile nicht aufweist. Die Löcher zur Aufnahme der Stifte in den als Stützen dienenden Zähnen sollen in verschiedenen Richtungen gebohrt werden können, wobei keine Parallelität zwischen zwei in den Zahn gebohrten Löchern notwendig sein soll. Im weiteren sollen keine Bohrlehren gebraucht werden müssen. Das Verankerungselement soll zuerst mit einem Stift in den Zahn einzementiert werden können. Danach soll durch die durchgehende Ausnehmung hindurch mit dem Bohrer das zweite Loch zur Aufnahme des zweiten Stiftes in den Zahn gebohrt werden können. Das Verankerungselement soll direkt am Zahn anliegen.

Dies wird erfindungsgemäss bei einer eingangs erwähnten Vorrichtung dadurch erzielt, dass mindestens eine Ausnehmung durchgehend ausgebildet ist. Das Verankerungselement ist im Bereich der Austrittsseite der Stifte vorzugsweise eben ausgebildet.

Die ebene Ausbildung im Bereich der Austrittsseite der Stifte weist den Vorteil auf, dass das Verankerungselement direkt am Zahn anliegt, wobei der Zahn in diesem Bereich vorzugsweise plangeschliffen wird. Dadurch können keine Speisereste zwischen Zahn und Verankerungselement gelangen, was zu Karies führen könnte. Im weiteren werden durch das direkte Anliegen am Zahn für den Zahn schädliche Hebeleffekte vermieden.

Wenn die Verankerungselemente eingesetzt sind, kann vom Zahnarzt sofort ein Abdruck zum Herstellen der Brücke gemacht werden. Es sind keine Hilfskappen notwendig. Durch das dichte Anliegen des Verankerungselementes am Zahn wird auch vermieden, dass Abdruckmaterial zwischen Verankerungselement und Zahn läuft.

Es ist für den Zahnarzt viel leichter, das Verankerungselement mit nur einem darin gehaltenen Stift in eine Bohrung im Zahn einzusetzen, als ein Verankerungselement gemäss den obgenannten vorveröffentlichten britischen Patentanmeldungen, bei welchen beide Stifte von Anfang an gegeneinander dreh- und schwenkbar im Verankerungselement gelagert sind. Der Zahnarzt wird ja das Verankerungselement mit der Pinzette einsetzen. Wenn nun zwei gegeneinander verschieb- und/oder verschwenkbare Stifte bereits im nichteingesetzten Verankerungselement vorhanden sind, so erfordert dies eine sehr grosse Geschicklichkeit vom Zahnarzt. Dies kann durch die erfindungsgemässe Vorrichtung vermieden werden.

Bei der Einzementierung des erfindungsgemässen Verankerungselementes mit den Stiften in den bestehenden Zahn muss lediglich in die in den Zahn gebohrten Löcher Zement eingefüllt werden. Es ist nicht notwendig, wie dies bei den vorbekannten Gegenständen gemäss den obgenannten veröffentlichten britischen Patentanmeldungen der Fall ist, auch Zement in die Ausnehmungen im Verankerungselement einzufüllen.

Es werden vorzugsweise zwei Ausführungsformen konzipiert, von denen die eine im Bereich der Schneidezähne und die andere im Bereich der Molaren verwendet wird.

Bei der Ausführungsform zur Verwendung im Bereich der Schneidezähne ist die äussere Begrenzung des Verankerungselementes der Vorrichtung zur Befestigung von Zahnprothesen teilweise zylindermantelförmig und im Bereich der Austrittsseite der Stifte eben ausgebildet.

Die bevorzugte Ausführungsform zur Verwendung im molaren Bereich ist konisch ausgebildet, wobei die Tragfläche des Verankerungselementes grösser wird, da im molaren Bereich grössere Kräfte auftreten. Im Bereich der Austrittsseite der Stifte ist die Vorrichtung ebenfalls eben ausgebildet.

Weitere bevorzugte Ausführungsformen ergeben sich aus den abhängigen Ansprüchen.

Im folgenden werden anhand der beiliegenden Zeichnung Ausführungsbeispiele sowie deren Verwendung näher beschrieben. Es zeigen:

Fig. 1 eine schematische Darstellung zur Verdeutlichung der Verwendung der Vorrichtung zur Befestigung von Zahnprothesen,

Fig. 2 eine Seitenansicht eines ersten Ausführungsbeispiels der Erfindung,

Fig. 3 eine Draufsicht auf das Ausführungsbeispiel gemäss Fig. 2,

Fig. 4 eine Frontansicht des Ausführungsbeispiels gemäss den Fig. 2 und 3,

Fig. 5 eine perspektivische Ansicht von unten des ersten Ausführungsbeispiels,

Fig. 6 ein zweites Ausführungsbeispiel der Erfindung in Seitenansicht,

Fig. 7 eine Ansicht von oben des zweiten Ausführungsbeispiels,

Fig. 8 eine Ansicht des zweiten Ausführungsbeispiels,

Fig. 9 eine perspektivische Darstellung des Verankerungselementes des zweiten Ausführungsbeispiels,

Fig. 10 eine Schnittansicht eines dritten Ausführungsbeispiels der Erfindung,

Fig. 11 eine Ansicht von vorne des Ausführungsbeispiels gemäss Fig. 10.

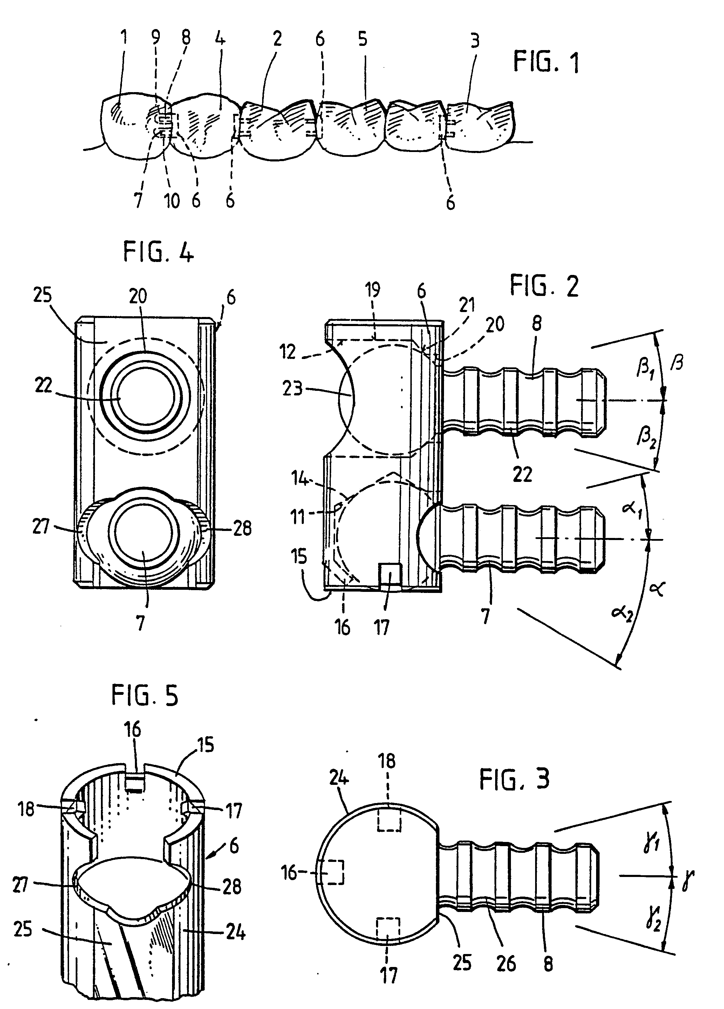

In Fig. 1 ist die Verwendung der Vorrichtung zur Befestigung von Zahnprothesen schematisch dargestellt. Drei bestehende Zähne 1, 2 und 3 begrenzen zwei Zahnlücken, in welche Prothesen 4 und 5 eingesetzt sind. In den bestehenden Zähnen 1, 2 und 3 sind die Verankerungselemente 6 mit Stiften 7 und 8 befestigt, wobei die Stifte 7 und 8 in entsprechende Bohrungen 9 und 10 der bestehenden festen Zähne einzementiert werden.

Die Prothesen 4 und 5 werden auf den Verankerungselementen 6 befestigt. Die Verankerungselemente 6 sowie die Stifte 7 und 8 sind vorzugsweise aus Titan gefertigt.

In Fig. 2 ist eine Seitenansicht eines ersten Ausführungsbeispiels, welches vorzugsweise für Schneidezähne verwendet wird, dargestellt. Die Vorrichtung zur Befestigung von Zahnprothesen umfasst ein Verankerungselement 6 sowie zwei in bestehende Zähne einzufügende Stifte 7 und 8, die mit dem Verankerungselement 6 dreh- und verschwenkbar verbunden sind. Das Verankerungselement 6 umfasst eine untere Ausnehmung 11, welche sacklochförmig, und eine obere Ausnehmung 12, welche durchgehend ausgebildet ist. Die untere Ausnehmung 11 weist ein konisches Ende 14 auf. Am Zylindermantel 15 sind drei Ansatzstücke 16, 17 und 18 vorgesehen. Die obere Ausnehmung 12 besteht aus zwei zylindrischen Teilen 19 und 20, wobei zwischen diesen beiden Teilen ein Absatz 21 vorgesehen ist. Die Stifte 7 und 8 sind identisch und weisen je einen zylinderförmigen Teil 22 und einen kugelförmigen Teil 23 auf. Der untere Stift 7 wird in der unteren Ausnehmung 11 mit den Ansätzen 16, 17 und 18 dreh- und verschwenkbar gehalten. Der obere Stift 8 kann mit seinem zylinderförmigen Teil 22 zuerst durch die grössere zylindrische Öffnung 19 und anschliessend durch die zweite zylindrische Öffnung 20 mit kleinerem Durchmesser hindurchgesteckt werden, wobei der Stift mit dem kugelförmigen Ende 23 am Ansatz 21 aufliegt und in der oberen Öffnung 12 ebenfalls dreh- und verschwenkbar gelagert ist. Der Stift 7 ist in einer Vertikalebene um den Winkel $\alpha$ und der Stift 8 um den Winkel $\beta$ verschwenkbar gelagert. Der untere Stift 7 kann gegen unten um den Winkel $\alpha_2$ (30°) und gegen oben um den kleineren Winkel $\alpha_1$ (15°) verschwenkt werden. Der obere Stift 8 kann gegen unten und oben um den Winkel $\beta_1, \beta_2$ (15°) verschwenkt werden.

In Fig. 3 ist eine Draufsicht auf das Ausführungsbeispiel gemäss Fig. 2 dargestellt. Das Verankerungselement 6 ist an seiner Aussenfläche 24 im Teil, der zum Aufbringen der Prothese dient, zylindermantelförmig ausgebildet. Im Bereich 25, wo die zylinderförmigen Teile der Stifte aus dem Verankerungselement herausragen, d.h. gegen den als Stütze dienenen Zahn zu, ist das Verankerungselement eben ausgebildet. Die Stifte 7 und 8 sind mit Rillen 26 versehen. In der Horizontalebene ist der obere Stift 8 um den Winkel $\gamma$ (30°) verschwenkbar, und zwar auf beiden Seiten je um den Winkel $\gamma_1$ (15°).

In Fig. 4 ist eine Ansicht des ersten Ausführungsbeispiels von vorne, d.h. von den zylinderförmigen Teilen der Stifte aus auf das Verankerungselement, dargestellt. Im Bereich des unteren Stiftes 7 sind seitlich Aussparungen 27 und 28 vorgesehen, die es ermöglichen, dass der untere Stift 7 in der Horizontalebene um einen grösseren Winkel verschwenkt werden kann als der obere Stift 8.

In Fig. 5 ist das Verankerungselement perspektivisch von unten her dargestellt. Es sind die drei Ansatzstücke 16 bis 18 sichtbar, welche durch Einschnitte in den Zylindermantel hergestellt sind und etwas abgebogen werden, um den kugelförmigen Teil des Stiftes in der unteren Ausnehmung 11 zu halten.

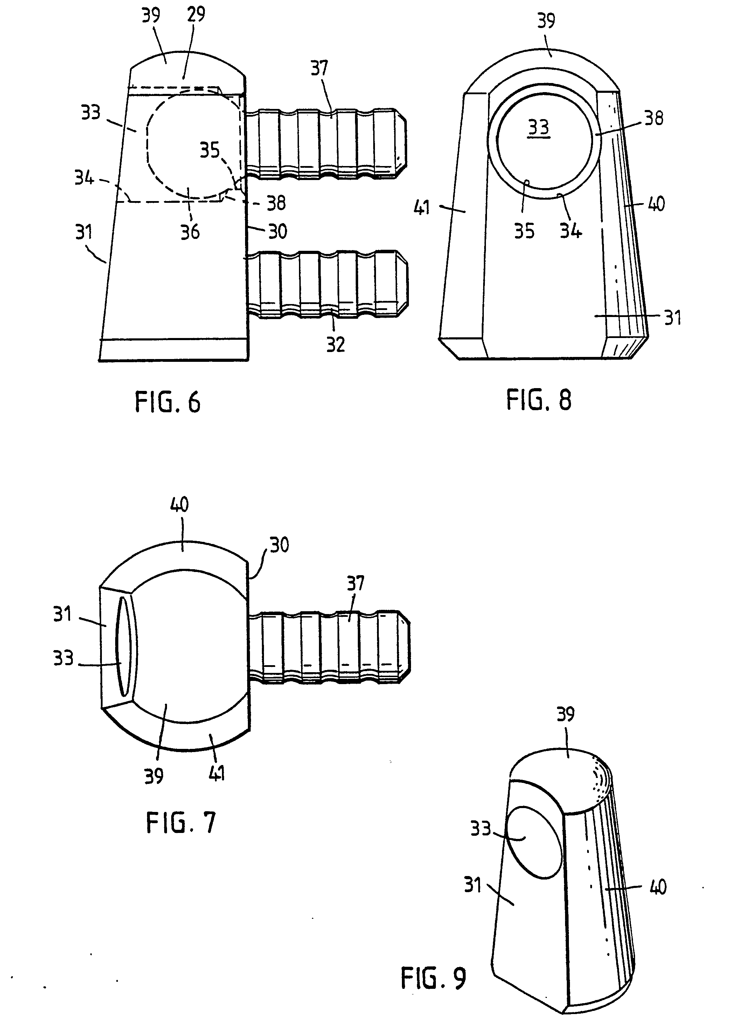

In Fig. 6 ist ein zweites Ausführungsbeispiel der Erfindung, welches vorzugsweise für Molaren verwendet wird, in Seitenansicht dargestellt. Im Bereich 30, wo die zylinderförmigen Teile der Stifte aus der Prothese herausragen, d.h. gegen den als Stütze dienenden Zahn zu, ist das Verankerungselement eben ausgebildet. Die gegenüberliegende Fläche 31 ist ebenfalls eben ausgebildet. Die untere, nicht sichtbare Ausnehmung ist ebenfalls nicht durchgehend ausgebildet, wobei der Stift 32 auf dieselbe Art und Weise gehalten wird wie beim ersten Ausführungsbeispiel gemäss den Fig. 2 bis 5. Die obere Ausnehmung 33 weist zwei zylinderförmige Teile 34 und 35 mit verschiedenem Durchmesser auf und ist durchgehend ausgebildet. Der kugelförmige Teil 36 des oberen Stiftes 37 liegt an einem die beiden zylinderförmigen Teile 34 und 35 verbindenden Absatz 38 an. Das obere Ende 39 des Verankerungselementes ist abgerundet ausgebildet.

In Fig. 7 ist das zweite Ausführungsbeispiel gemäss Fig. 6 in Ansicht von oben dargestellt. Die zwei, die Flächen 30 und 31 des Verankerungselementes 29 verbindenden Flächen 40 und 41 sind kegelmantelförmig ausgebildet.

Die Fig. 8 zeigt eine Ansicht des zweiten Ausführungsbeispiels gemäss Fig. 6 ohne eingesetzte Stifte und Fig. 9 eine perspektivische Darstellung des Verankerungselementes gemäss dem zweiten Ausführungsbeispiel.

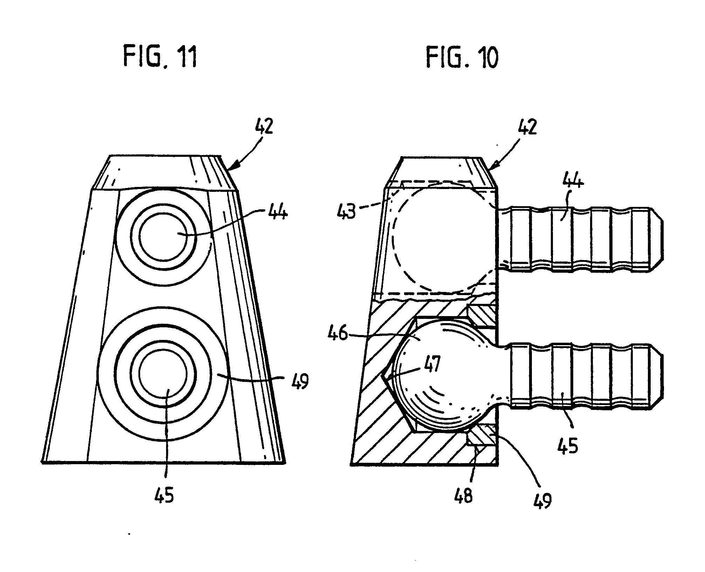

In den Fig. 10 und 11 ist ein weiteres Ausführungsbeispiel 42 eines Verankerungselementes dargestellt. Die obere Ausnehmung 43 für den oberen Stift 44 ist ebenfalls durchgehend ausgebildet. Der obere Stift 44 ist nach dem Einsetzen in die durchgehende Ausnehmung 43 dreh- und schwenkbar gelagert. Der untere Stift 45 ist mit seinem kugelförmigen Ende 46 in einer nichtdurchgehenden Ausnehmung 47 dreh- und schwenkbar gelagert. Der untere Stift 45 wird in der Ausnehmung 47 durch einen in eine kreisringförmige Ausnehmung 48 des Verankerungselementes 42 eingesetzten Ring 49 gehalten.

Das Verankerungselement 6, 29, 42 wird vorzugsweise zuerst mit dem unteren Stift 7, 32, 45 in die untere Bohrung im Zahn einzementiert. Alsdann wird vorzugsweise durch die obere durchgehende Ausnehmung 12, 33 im Verankerungselement das zweite Loch in den Zahn zur Aufnahme des oberen Stiftes 8, 37 gebohrt. Das Verankerungselement kann um den einzementierten unteren Stift verschwenkt werden. Durch die Verschwenkbarkeit der Stifte brauchen die beiden Bohrungen nicht parallel zu sein.

Es kann von Vorteil sein, die unteren Stifte 7, 32, 45 so zu halten, dass sie nach unten um einen wesentlich grösseren Winkel als 30° verschwenkt werden können.

Auch mit den beschriebenen Vorrichtungen zur Befestigung der Zahnprothesen ist ein Abschleifen von gesunden Zähnen zum Einsetzen von z. B. Brücken nicht mehr notwendig.

## Patentansprüche

1. Vorrichtung zur Befestigung von Zahnprothesen mit mindestens einem Verankerungselement, welches mindestens zwei Ausnehmungen (11, 12) aufweist, in welchen zum Eingreifen in bestehende Zähne oder Stützen bestimmte Stifte (7, 8) gelagert sind, wobei mindestens ein Stift in der für ihn bestimmten Ausnehmung drehbar gelagert ist, dadurch gekennzeichnet, dass mindestens eine Ausnehmung (12) durchgehend ausgebildet ist.

2. Vorrichtung nach Patentanspruch 1, dadurch gekennzeichnet, dass mindestens eine Ausnehmung mit Halteorganen (49) für den Stift versehen ist.

3. Vorrichtung nach einem der vorangehenden Patentansprüche, dadurch gekennzeichnet, dass das Verankerungselement im Bereich der Austrittsseite der Stifte eben ausgebildet ist.

4. Vorrichtung nach einem der vorangehenden Patentansprüche, dadurch gekennzeichnet, dass die äussere Begrenzung des Verankerungselementes zumindest teilweise zylindermantelförmig ausgebildet ist.

5. Vorrichtung nach einem der Patentansprüche 1 bis 3, dadurch gekennzeichnet, dass das Verankerungselement konisch ausgebildet ist.

6. Vorrichtung nach Patentanspruch 5, dadurch gekennzeichnet, dass die äussere Begrenzung des Verankerungselementes zumindest teilweise kegelmantelförmig ausgebildet ist.

7. Vorrichtung nach einem der Patentansprüche 1 bis 6, dadurch gekennzeichnet, dass die Stifte einen zylinderförmigen und einen kugelförmigen Teil (22, 23) aufweisen.

8. Vorrichtung nach Patentanspruch 7, dadurch gekennzeichnet, dass der zylinderförmige Teil (22) mit Rillen (26) versehen ist.

## Claims

1. Device for attaching dental prostheses having at least one anchoring element which has at least two recesses (11, 12) in which pins (7, 8) intended to engage in existing teeth or supports

are mounted, at least one pin being pivoted in the recess intended for it, characterized in that at least one recess (12) is formed through-going.

2. Device according to patent claim 1, characterized in that at least one recess is provided with holding parts (49) for the pin.

3. Device according to one of the previous patent claims, characterized in that the anchoring element is formed plane in the region of the exit side of the pins.

4. Device according to one of the previous patent claims, characterized in that the outer limitation of the anchoring element is formed at least partially cylindrical shell-shaped.

5. Device according to one of the patent claims 1 to 3, characterized in that the anchoring element is formed conical.

6. Device according to patent claim 5, characterized in that the outer limitation of the anchoring element is formed at least partially conical shell-shaped.

7. Device according to one of the patent claims 1 to 6, characterized in that the pins have a cylindrical and a spherical portion (22, 23).

8. Device according to patent claim 7, characterized in that the cylindrical portion (22) is provided with grooves (26).

**Revendications**

1. Dispositif pour la fixation de prothèses dentaires avec au moins un élément d'ancrage, lequel élément présente au moins deux creusures (11, 12) dans lesquelles sont articulés des pivots (7, 8) déterminés pour la prise dans des dents ou des soutiens existants, un pivot au moins étant articulable en rotation dans la creusure qui lui est affectée, caractérisé en ce que au moins une creusure (12) est ouverte de part en part.

2. Dispositif selon la revendication 1, caractérisé en ce que au moins une creusure est pourvue d'organes de retenue (49) pour le pivot.

3. Dispositif selon l'une des revendications précédentes, caractérisé en ce que l'élément d'ancrage est de forme plane dans la zone du côté d'émergence du pivot.

4. Dispositif selon l'une des revendications précédentes, caractérisé en ce que la délimitation extérieure de l'élément d'ancrage présente au moins partiellement la forme d'un corps de cylindre.

5. Dispositif selon l'une des revendications 1 à 3, caractérisé en ce que l'élément d'ancrage présente la forme d'un cône.

6. Dispositif selon la revendication 5, caractérisé en ce que la délimitation extérieure de l'élément d'ancrage présente au moins partiellement la forme d'un corps conique.

7. Dispositif selon l'une des revendications 1 à 6, caractérisé en ce que les pivots présentent une partie en forme de cylindre et une partie en forme de sphère (22, 23).

8. Dispositif selon la revendication 7, caractérisé en ce que la partie en forme de cylindre (22) est pourvue de rainures (26).

FIG. 1

FIG. 4

FIG. 2

FIG. 5

FIG. 3

FIG. 6

FIG. 8

FIG. 7

FIG. 9

FIG. 11

FIG. 10

42

44

49

45

42

43

44

46

47

48

49

45

5